# EUROPÄISCHE PATENTSCHRIFT

(11) **EP 0 544 986 B1**
(45) Veröffentlichungstag und Bekanntmachung des Hinweises auf die Patenterteilung: **13.03.1996**
(21) Anmeldenummer: 92111301.5
(22) Anmeldetag: 03.07.1992
(51) Int. Cl.: F16C 27/06

(54) **Lager**
Bearing
Palier

(30) Priorität: 04.12.1991 DE 4139923
(43) Veröffentlichungstag der Anmeldung: 09.06.1993
(73) Patentinhaber: Firma Carl Freudenberg, D-69469 Weinheim (DE)
(72) Erfinder: Schwerdt, Hans-Werner, W-6947 Laudenbach (DE)

(56) Entgegenhaltungen:
- EP-A- 0 160 212
- DE-A- 1 575 727
- GB-A- 1 025 402
- GB-A- 2 022 195
- GB-A- 2 023 240

## Beschreibung

Die Erfindung betrifft ein Lager, umfassend zwei eine gedachte Achse koaxial umschließende, hohlzylindrische Stützringe, die durch ein Balgelement aus elastomerem Werkstoff radial elastisch verbunden sind, wobei das Balgelement ein Profil mit zumindest einer in axialer Richtung vorstehenden Falte mit einer axialen Erstreckung aufweist, die die axiale Ausdehnung von keinem der Stützringe übergreift, wobei zumindest ein Anschlagpuffer außerhalb der axialen Erstreckung der Falte vorgesehen ist, wobei der Anschlagpuffer ein Profil aufweist, das sich während der bestimmungsgemäßen Verwendung, ausgehend von zumindest einem der Stützringe radial in Richtung des anderen Stützringes erstreckt und daß sich der Anschlag in radialer Richtung teilweise mit der Falte überlappt.

Ein solches Lager ist aus der DE-A-1 575 727 bekannt. Das Lager ist zur Schwingungsisolierung von umlaufenden Wellen vorgesehen, insbesondere für Wäschezentrifugen, wobei das Balgelement dünnwandig ausgeführt und im radialen Querschnitt wellenförmig ausgebildet ist. Die Wellenberge und die Wellentäler liegen auf konzentrischen Kreisen um die Achse. Die Flankenteile des Balgelements weisen in Umfangsrichtung angeordnete Verdickungen auf, die bei radialer Verformung zur Anlage am gegenüberliegenden Teil des wellenförmigen Querschnitt gelangen. Die Verdickungen an den Stirnseiten des Balgelements sind in axialer Richtung außerhalb von einem der Stützringe angeordnet.

Ein weiteres Lager ist aus dem DE-GM 81 00 855 bekannt. Danach ist ein ringförmiges Element aus elastisch nachgiebigem Werkstoff,. das unmittelbar fest zwischen der Mantelfläche eines Innenrings und der Innenfläche eines Außenrings angeordnet.

Dabei ist allerdings zu beachten, daß das ringförmige Element aus elastischem Werkstoff insbesondere bei großen Belastungen in radialer Richtung im Bereich seiner in axialer Richtung vorspringenden Einfaltungen ungleichmäßig durch Druck- und Schubspannungen belastet wird. Außerdem ist die Pufferwirkung des als Keil ausgebildeten und im elastisch nachgiebigen Werkstoff des Elementes angeordneten Puffer wenig befriedigend. Durch die keilförmige Ausbildung des Puffers wird das Material ungleichmäßig belastet und, bei großen Auslenkbewegungen in radialer Richtung legen sich die Flächen, die die Ausnehmung begrenzen, aneinander an, was die Gebrauchsdauer durch Rißbildung in Umfangsrichtung infolge auftretender Schubspannungen stark einschränkt.

Der Erfindung liegt die Aufgabe zugrunde, ein solches Lager derart weiterzuentwickeln, daß sich eine Erhöhung der Gebrauchsdauer bei besserer Funktion des Lagers ergibt.

Diese Aufgabe wird erfindungsgemäß bei einem Lager der eingangs genannten Art mit den kennzeichnenden Merkmalen von Anspruch 1 gelöst. Auf vorteilhafte Ausgestaltung nehmen die Unteransprüche Bezug.

Bei dem erfindungsgemäßen Lager ist es vorgesehen, daß das Balgelement aus einem thermoplastischen Elastomerwerkstoff besteht und daß der Anschlagpuffer in axialer Richtung gesehen innerhalb der Stützringe angeordnet ist. Eine Ausführung des Balgelementes aus thermoplastischem Elastomerwerkstoff ist in wirtschaftlicher Hinsicht wegen der einfachen, problemlosen Fertigung der Teile besonders vorteilhaft. Durch die Ausbildung der Anschlagpuffer, die sich im wesentlichen in radialer Richtung des Lagers erstrecken, wird eine Beschädigung der funktionswesentlichen Teile bei extremer Auslenkung in radialer Richtung wirkungsvoll verhindert. Durch die Länge der Anschlagpuffer kann die maximale Auslenkung des Lagers in radialer Richtung genau eingestellt werden.

Nach einer vorteilhaften Ausgestaltung ist es vorgesehen, daß das Balgmaterial zwei in axialer Richtung entgegengesetzt vorstehende Falten aufweist, die auf voneinander abweichenden Axialebenen bezüglich der gedachten Achse angeordnet und in radialer Richtung einstückig ineinander übergehend ausgebildet sind. Die Ausgestaltung bedingt eine große Radialbeweglichkeit des Lagers und außerordentlich geringe Belastungen bei radialen Auslenkbewegungen auf das Balgelement und die innerhalb des Balgelements angeordneten Falten. Ein derart ausgestaltetes Lager weist während einer langen Gebrauchsdauer gleichbleibend gute Gebrauchseigenschaften auf.

Im Hinblick auf eine einfache Fertigung des Balgelementes ist vorgesehen, daß im Bereich zumindest einer axialen Begrenzung des Balgelementes mehrere in Umfangsrichtung durch Abstände voneinander getrennte Anschlagpuffer vorgesehen sind und daß die Anschlagpuffer als Radialanschläge ausgebildet sein können.

Nach einer anderen Ausgestaltung können die Anschlagpuffer ringförmig ausgebildet sein. Diese Ausgestaltung bedingt bei Begrenzung von Extremauslenkungen der beiden Stützringe relativ zueinander eine vergleichsweise geringere Flächenpressung der Anschlagpuffer, wodurch die spezifische Materialbelastung herabgesetzt und die Gebrauchsdauer erhöht wird.

An den Radialanschlag kann ein Axialanschlag angeformt sein.

Das Balgelement kann an den einander diagonal gegenüberliegenden Ecken seines Profils mit in entgegengesetzter Richtung vorstehenden Anschlagpuffern versehen sein. Durch diese Anordnung der Anschlagpuffer wird bei maximaler Auslenkung des Lagers in radialer Richtung eine gleichmäßige Belastung des Dichtbalges gewährleistet. Außerdem treten an dem von dem Lager umschlossenen Teil keine Biegemomente auf.

Die Anschlagpuffer können aus elastomerem Werkstoff bestehen und einstückig mit dem Balgelement ausgebildet sein. Hierbei ist von Vorteil, daß eine derartige Ausgestaltung in fertigungstechnischer Hinsicht von Vorteil und hervorzuhebender Bedeutung ist. Außerdem bedingen Anschlagpuffer aus elastomerem Werkstoff die zuverlässige Vermeidung von Anschlaggeräuschen bei Extremauslenkungen des Lagers.

Nach einer anderen Ausgestaltung kann es vorgesehen sein, daß die Anschlagpuffer durch Anschlagbleche gebildet sind, die im Bereich zumindest eines der Stützringe angeordnet sind. Durch separate ausgebildete Anschlagpuffer, die aus Blech bestehen, können verschiedenartig ausgestaltete Anschlagpuffer vergleichsweise einfach hergestellt und nachträglich dem Lager zugeordnet werden. Insbesondere bei Ausbildung der Anschlagpuffer als Radial- und Axialanschlag weist eine derartige Ausgestaltung Vorteile auf, da sowohl die Anschlagpuffer selbst als auch das zur Anwendung gelangende Balgelement in fertigungstechnischer Hinsicht einfach und separat hergestellt werden können.

Gemäß einer vorteilhaften Ausgestaltung ist vorgesehen, daß das Balgelement im Bereich von zumindest einem Stützring durch eine Metalleinlage versteift ist. Die Metalleinlage kann mit Durchbrechungen versehen sein und im Bereich der Durchbrechungen mit dem Balgelement durchdrungen sein. Die Metalleinlage bedingt eine größere Stabilität des vergleichsweise weichen Balgelementes am äußeren Umfang. Durch diese Metalleinlage ist auch ein Einbau des Lagers direkt in einer kreisförmigen Öffnung eines Gehäuses denkbar, ohne daß der thermoplastische Elastomerwerkstoff beschädigt wird. Die Durchbrechungen in der Metalleinlage, die von dem Balgelement durchdrungen sind, bewirken eine einwandfreie und einfache Festlegung des Balgelementes an der Metalleinlage.

Die die Durchbrechungen durchdringenden Bestandteile des Balgelementes können im Bereich der Rückseite der Durchbrechungen ineinander übergehend ausgebildet sein. Hierbei ist von Vorteil, daß das Befestigungselement des Lagers, beispielsweise in Form eines Fußes, ebenfalls aus dem preiswerten, thermoplastischen Elastomerwerkstoff hergestellt und direkt, einstückig an das Balgelement angeformt werden kann.

Bei dem Verfahren zur Herstellung eines Lagers ist vorgesehen, daß ein thermoplastischer Elastomerwerkstoff verwendet und daß zumindest einer der Stützringe im Bereich seines in axialer Richtung vorstehenden Endes im Anschluß an die Formgebung und Verfestigung erneut thermisch erweicht, in Richtung des anderen Stützringes umgeformt und durch Abkühlung verfestigt wird. Dieses Verfahren ermöglicht eine einfache Herstellbarkeit des Lagers. Um das Lager ausformen zu können, sind die Anschläge zunächst einstückig, in axialer Richtung an die Stützringe des Balgelementes angeformt. Nach dem Entformen werden die Anschläge erneut erwärmt und in die gewünschte Richtung verformt.

Der Gegenstand der Erfindung wird nachfolgend anhand der als Anlage beigefügten Zeichnung eines Ausführungsbeispiels weiter verdeutlicht. Es zeigen:
- Figur 1: ein Lager in quergeschnittener Darstellung und
- Figur 2: das in Figur 1 dargestellte Lager in einer Ansicht.
- Figur 3: ein anderes Ausgestaltungsbeispiel eines Lagers der erfindungsgemäßen Art in einem Schnitt entlang der Linie A-A gemäß Figur 4.
- Figur 4: Eine Draufsicht des in Figur 3 dargestellten Ausführungsbeispiels.

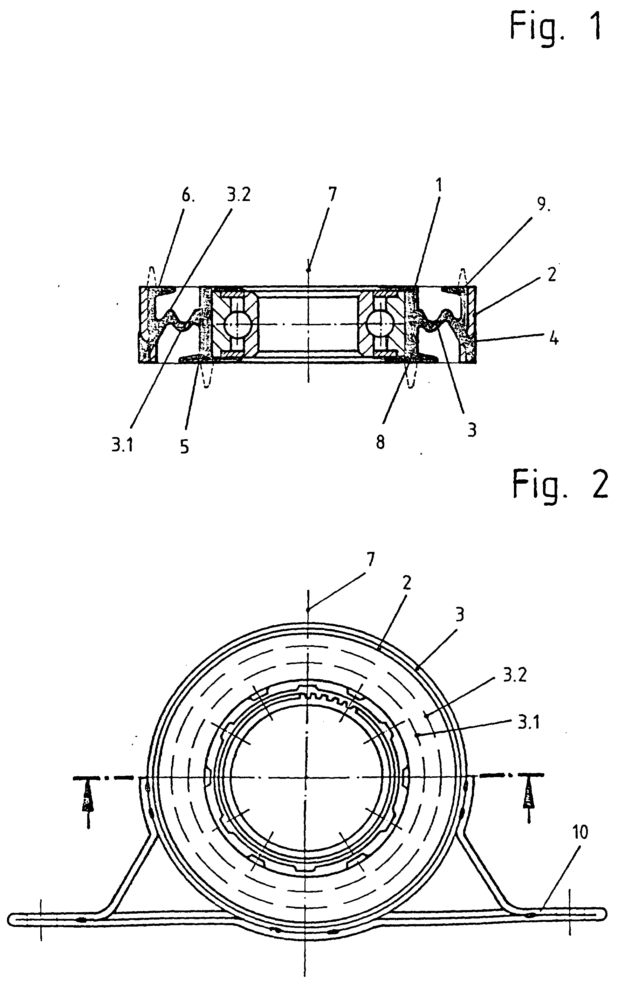

In Figur 1 ist ein Lager gezeigt, umfassend zwei eine gedachte Achse 7 koaxial umschließende, hohlzylindrische Stützringe 1, 2, die durch ein Balgelement 3 aus thermoplastischem Elastomerwerkstoff radialelastisch verbunden sind. Das Balgelement 3 weist zwei in axialer Richtung entgegengesetzt vorstehende Falten 3.1, 3.2 auf und Anschlagpuffer 5, 6, die zur Begrenzung einer radialen Auslenkung des Lagers vorgesehen sind. Die Anschlagpuffer 5, 6, die nach dem Entformen des Lagers die gestrichelt dargestellte Lage einnehmen, erstrecken sich nach erneutem Erwärmen und anschließender Verformung im wesentlichen senkrecht zu der gedachten Achse 7. Vorteilhafterweise sind mehrere, in Umfangsrichtung durch Abstände voneinander getrennte Anschlagpuffer vorgesehen, wodurch unvorteilhafte Materialanhäufungen und hohes Gewicht des Lagers vermieden werden. Die Anschläge 5, 6 schützen die Falten 3.1, 3.2 des Balgelementes 3 vor Beschädigung und mechanischer Überbeanspruchung bei großen Auslenkungen des Lagers in radialer Richtung. Das zweite Stützelement 2 ist durch einen gekröpften Metallring gebildet, der Durchbrechungen 4 aufweist, die von dem Balgelement 3 durchdrungen sind. Eine gute, widerstandsfähige und dauerhafte Festlegung des Balgelementes 3 am Stützring 2 und die Lagerung in einem Gehäuse, das das Lager außenseitig umschließt, ist dadurch problemlos möglich.

Figur 2 zeigt das in Figur 1 gezeigte Lager in einer Ansicht. In diesem Beispiel ist es vorgesehen, daß der Befestigungsfuß 10, der zur Befestigung des Lagers vorgesehen ist, aus Metall besteht und an der Metalleinlage des Stützringes 2 befestigt ist. Eine ähnliche Ausbildung der Befestigung ist auch möglich und insbesondere für weniger stark belastete Lager vorteilhaft, wenn der Befestigungsfuß 10 direkt am thermoelastischen Material des Balgelementes 3 im Bereich des Stützringes 2 angeformt ist. Wegen einer übersichtlicheren Darstellung ist der Anschlag 5 im Zustand direkt nach dem Entformen und vor dem Umformen in radialer Richtung abgebildet.

Die in den Figuren 1 und 2 gezeigten Lager können beispielsweise zur Lagerung einer Kardanwelle zur Anwendung gelangen.

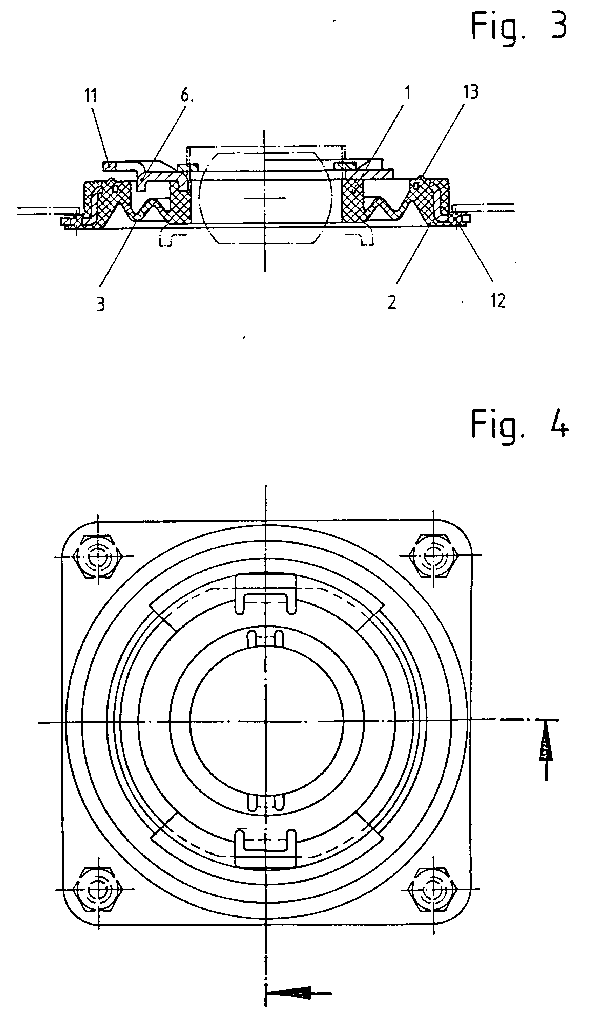

In Figur 3 ist ein weiteres Ausgestaltungsbeispiel eines Lagers der erfindungsgemäßen Art gezeigt, bei dem der Anschlagpuffer 6 als Radialanschlag ausgebildet ist und aus Blech besteht, wobei an den Radialanschlag ein Axialanschlag 11 angeformt ist, um Auslenkbewegungen der Stützringe 1, 2 in axialer Richtung zu begrenzen. Im Bereich des äußeren Stützringes 2 ist in diesem Fall ein in radialer Richtung nach außen vorspringender weiterer Anschlag 12 vorgesehen, der an einem schematisch dargestellten Bauteil zur Anlage gelangt. Im Bereich des radial äußeren Stützringes 2 ist ein umlaufender, federnder Wulst 13 angeordnet, der aus elastomerem Werkstoff besteht und einstückig mit dem Balgelement 3 ausgebildet ist. Bei Auslenkbewegungen der beiden Stützringe 1, 2 relativ zueinander kann der Wulst 13 mit dem Axialanschlag 11 in Eingriff gebracht werden. Die Wegbegrenzung kann dabei beispielsweise eine progressive Kraft- Weg-Kennlinie aufweisen.

In Figur 4 ist das in Figur 3 dargestellte Lager in einer Draufsicht gezeigt.

## Patentansprüche

1. Lager, umfassend zwei eine gedachte Achse (7) koaxial umschließende, hohlzylindrische Stützringe (1, 2), die durch ein Balgelement (3) aus elastomerem Werkstoff radial elastisch verbunden sind, wobei das Balgelement (3) ein Profil mit zumindest einer in axialer Richtung vorstehenden Falte (3.1, 3.2) aufweist, die die axiale Ausdehnung von keinem der Stützringe (1, 2) übergreift, wobei zumindest ein Anschlagpuffer (5, 6) außerhalb der axialen Erstreckung der Falte (3.1, 3.2) vorgesehen ist und wobei der Anschlagpuffer (5, 6) ein Profil aufweist, das sich während der bestimmungsgemäßen Verwendung, ausgehend von zumindest einem der Stützringe (1, 2) radial in Richtung des anderen Stützrings (2, 1) erstreckt und wobei sich der Anschlagpuffer (5, 6) in radialer Richtung teilweise mit der Falte (3.1, 3.2) überlappt, dadurch gekennzeichnet, daß das Balgelement (3) aus einem thermoplastischen Elastomerwerkstoff besteht und daß der Anschlagpuffer (5, 6) in axialer Richtung gesehen innerhalb der Stützringe angeordnet ist.

2. Lager nach Anspruch 1, dadurch gekennzeichnet, daß das Balgelement (3) zwei in axialer Richtung entgegengesetzt vorstehende Falten (3.1, 3.2) aufweist, die auf voneinander abweichenden Axialebenen bezüglich der gedachten Achse (7) angeordnet und in radialer Richtung einstückig ineinander übergehend ausgebildet sind.

3. Lager nach Anspruch 1 oder 2, dadurch gekennzeichnet, daß im Bereich zumindest einer axialen Begrenzung des Balgelementes (3) mehrere in Umfangsrichtung durch Abstände voneinander getrennte Anschlagpuffer (5, 6 ) vorgesehen sind und daß die Anschlagpuffer (5, 6 ) als Radialanschlag ausgebildet sind.

4. Lager nach Anspruch 1 oder 2, dadurch gekennzeichnet, daß im Bereich zumindest einer axialen Begrenzung des Balgelements (3) ein ringförmig ausgebildeter Anschlagpuffer vorgesehen ist, der als Radialanschlag ausgebildet ist.

5. Lager nach Anspruch 3 oder 4, dadurch gekennzeichnet, daß an den Radialanschlag (6) ein Axialanschlag (11) angeformt ist.

6. Lager nach einem der Ansprüche 1 bis 5, dadurch gekennzeichnet, daß das Balgelement (3) an den einander diagonal gegenüberliegenden Ecken (8, 9) seines Profils mit in entgegengesetzter Richtung vorstehenden Anschlagpuffern (5, 6) versehen ist.

7. Lager nach einem der Ansprüche 3 bis 6, dadurch gekennzeichnet, daß die Anschlagpuffer (5, 6) aus elastomerem Werkstoff bestehen und einstückig mit dem Balgelement (3) ausgebildet sind.

8. Lager nach einem der Ansprüche 3 bis 6, dadurch gekennzeichnet, daß die Anschlagpuffer (6) durch Anschlagbleche gebildet sind, die im Bereich zumindest eines der Stützringe (1, 2) angeordnet sind.

9. Lager nach einem der Ansprüche 1 bis 8, dadurch gekennzeichnet, daß das Balgelement (3) im Bereich von zumindest einem Stützring (1, 2) durch eine Metalleinlage versteift ist.

10. Lager nach Anspruch 9 , dadurch gekennzeichnet, daß die Metalleinlage mit Durchbrechungen (4) versehen und im Bereich der Durchbrechungen (4) versehen und im Bereich der Durchbrechungen (4) von dem Balgelement (3) durchdrungen ist.

11. Lager nach Anspruch 10, dadurch gekennzeichnet, daß die die Durchbrechungen (4) durchdringenden Bestandteile des Balgelements (3) im Bereich der Rückseite der Durchbrechungen (4) ineinander übergehend ausgebildet sind.

12. Verfahren zur Herstellung eines Lagers nach einem der Ansprüche 1 bis 7, bei dem ein polymerer Werkstoff in einem Formwerkzeug in die Gestalt eines Lagers überführt und verfestigt wird, das zwei einander konzentrisch umschließende, im wesentlichen hohlzylindrische Stützringe sowie ein die Stützringe verbindendes Balgelement umfaßt, dadurch gekennzeichnet, daß ein thermoplastischer Elastomerwerkstoff verwendet und daß zumindest einer der Stützringe (1, 2) im Bereich seines in axialer Richtung vorstehenden Endes im Anschluß an die Formgebung und Verfestigung erneut thermisch erweicht, in Richtung des anderen Stützrings (2, 1) umgeformt und durch Abkühlung verfestigt wird.

## Claims

1. A bearing, comprising two hollow cylindrical supporting rings (1, 2) coaxially enclosing an imaginary axis (7), which rings are connected in a radially elastic manner by a bellows element (3) made from elastomeric material, the bellows element (3) having a profile having at least one fold (3.1, 3.2) protruding in the axial direction, which fold does not reach over the axial expansion of any of the supporting rings (1, 2), at least one stop buffer (5, 6) being provided outside the axial extent of the fold (3.1,3.2), the stop buffer (5,6) having a profile which extends during prescriptively correct usage, starting from at least one of the supporting rings (1, 2), radially in the direction of the other supporting ring (2, 1), and the stop buffer (5, 6) overlapping partially with the fold (3.1, 3.2) in the radial direction, characterized in that the bellows element (3) consists of a thermoplastic elastomer material and in that the stop buffer (5, 6), viewed in the axial direction, is disposed within the supporting rings.

2. A bearing according to claim 1, characterized in that the bellows element (3) has two folds (3.1, 3.2), which protrude oppositely in the axial direction and which are disposed on mutually diverging axial planes relative to the imaginary axis (7) and are configured such that they merge integrally one into the other in the radial direction.

3. A bearing according to claim 1 or 2, characterized in that in the region at least of one axial limit of the bellows element (3) there are provided a plurality of stop buffers (5, 6, .....), which are separated from one another by spacings in the peripheral direction, and in that the stop buffers (5, 6, .....) are configured in the form of a radial stop.

4. A bearing according to claim 1 or 2, characterized in that in the region at least of one axial limit of the bellows element (3) there is provided an annularly configured stop buffer, which is configured in the form of a radial stop.

5. A bearing according to claim 3 or 4, characterized in that onto the radial stop (6) there is moulded an axial stop (11).

6. A bearing according to any one of claims 1 to 5, characterized in that the bellows element (3), at the mutually diagonally opposing corners (8, 9) of its profile, is provided with stop buffers (5, 6) protruding in opposite directions.

7. A bearing according to any one of claims 3 to 6, characterized in that the stop buffers (5, 6) consist of elastomeric material and are configured integrally with the bellows element (3).

8. A bearing according to any one of claims 3 to 6, characterized in that the stop buffers (6) are formed by stop plates, which are disposed in the region at least of one of the supporting rings (1, 2).

9. A bearing according to any one of claims 1 to 8, characterized in that the bellows element (3), in the region of at least one supporting ring (1, 2), is stiffened by a metal inlay.

10. A bearing according to claim 9, characterized in that the metal inlay is provided with apertures (4) and is penetrated in the region of the apertures (4) by the bellows element (3).

11. A bearing according to claim 10, characterized in that those components of the bellows element (3) which penetrate the apertures (4) are configured such that they merge one into the other in the region of the rear side of the apertures (4).

12. A process for manufacturing a bearing according to any one of claims 1 to 7, in which a polymer material is converted and hardened in a moulding tool into the shape of a bearing, which bearing comprises two essentially hollow cylindrical supporting rings, concentrically enclosing each other, and a bellows element connecting the supporting rings, characterized in that a thermoplastic elastomer material is used and in that, following the shaping and hardening, at least one of the supporting rings (1, 2), in the region of its end protruding in the axial direction, is thermically resoftened, reshaped in the direction of the other supporting ring (2, 1) and hardened by cooling.

## Revendications

1. Palier comprenant deux bagues d'appui (1, 2) en forme de cylindre creux entourant de manière coaxiale un axe imaginaire (7), qui sont reliées radialement, de manière élastique, par un élément (3) formant un soufflet en matière élastomère, l'élément (3) formant un soufflet ayant un profil présentant au moins un pli (3.1, 3.2) saillant dans la direction axiale, qui ne dépasse la dimension axiale d'aucune des bagues d'appui (1, 2), au moins un tampon d'arrêt (5, 6) étant prévu à l'extérieur de l'étendue axiale des plis (3.1, 3.2) et le tampon d'arrêt (5, 6) ayant un profil qui, partant d'au moins une des bagues d'appui (1, 2), s'étend radialement en direction de l'autre bague d'appui (2, 1) pendant l'utilisation conforme aux prescriptions, et le tampon d'arrêt (5, 6) et le pli (3.1, 3.2) se recouvrant, au moins en partie, dans la direction radiale, caractérisé en ce que l'élément (3) formant un soufflet est fait d'une matière élastomère thermoplastique et en ce que le tampon d'arrêt (5, 6), vu dans la direction axiale, est situé à l'intérieur des bagues d'appui.

2. Palier selon la revendication 1, caractérisé en ce que l'élément (3) formant un soufflet est pourvu de deux plis (3.1, 3.2) saillant en direction axiale dans des sens opposés, qui sont situés sur des plans axiaux s'écartant l'un de l'autre par rapport à l'axe imaginaire (7) et sont formés de façon à ce qu'ils se confondent dans la direction radiale.

3. Palier selon la revendication 1 ou 2, caractérisé en ce que plusieurs tampons d'arrêt (5, 6, ...) séparés les uns des autres par des intervalles dans la direction circonférentielle sont prévus dans la région d'au moins une limite axiale de l'élément (3) formant un soufflet et en ce que les tampons d'arrêt (5, 6, ...) sont formés en tant que butée radiale.

4. Palier selon la revendication 1 ou 2, caractérisé en ce qu'un tampon d'arrêt exécuté sous une forme annulaire, et formé en tant que butée radiale, est prévu dans la région d'au moins une limite axiale de l'élément (3) formant un soufflet.

5. Palier selon la revendication 3 ou 4, caractérisé en ce qu'une butée axiale (11) est formée sur la butée radiale (6).

6. Palier selon l'une des revendications 1 à 5, caractérisé en ce que l'élément (3) formant un soufflet est pourvu, aux angles (8, 9) diagonalement opposés de son profil, de tampons d'arrêt (5, 6) saillant en direction opposée l'un de l'autre.

7. Palier selon l'une des revendications 3 à 6, caractérisé en ce que les tampons d'arrêt (5, 6) sont faits dans une matière élastomère et sont solidaires avec l'élément (3) formant un soufflet.

8. Palier selon l'une des revendications 3 à 6, caractérisé en ce que les tampons d'arrêt (6) sont formés par des tôles d'arrêt qui sont situées dans la région d'au moins une des bagues d'appui (1, 2).

9. Palier selon l'une des revendications 1 à 8, caractérisé en ce que l'élément (3) formant un soufflet est raidi par une garniture métallique dans la région d'au moins une bague d'appui (1, 2).

10. Palier selon la revendication 9, caractérisé en ce que la garniture métallique est pourvue de découpures (4) et est traversée par l'élément (3) formant un soufflet dans la zone des découpures (4).

11. Palier selon la revendication 10, caractérisé en ce que les parties de l'élément (3) formant un soufflet qui traversent les découpures (4) sont exécutées de manière à se fondre les unes dans les autres dans la zone située à l'arrière des découpures (4).

12. Procédé de fabrication d'un palier selon l'une des revendications 1 à 7, dans lequel une matière polymère prend la forme d'un palier dans un outil de formage et est consolidée, lequel palier comprend deux bagues d'appui ayant essentiellement la forme d'un cylindre creux et s'entourant de manière concentrique, ainsi qu'un élément formant un soufflet reliant les bagues d'appui, caractérisé en ce que l'on utilise une matière élastomère thermoplastique et en ce que, à la suite du formage et de la consolidation, au moins une des bagues d'appui (1, 2) est à nouveau ramollie thermiquement dans la zone de son extrémité saillante en direction axiale, est reformée en direction de l'autre bague d'appui (2, 1) et consolidée par refroidissement.
